# EUROPÄISCHE PATENTANMELDUNG

(11) **EP 4 570 464 A1**
(43) Veröffentlichungstag der Anmeldung: **18.06.2025**
(21) Anmeldenummer: 24212552.4
(22) Anmeldetag: 13.11.2024
(51) Int. Cl.: B29B 17/02, B29B 17/04

(54) **VERFAHREN ZUR AUFBEREITUNG VON FAHRZEUGREIFEN**

(30) Priorität: 13.12.2023 DE 102023212573
(71) Anmelder: Continental Reifen Deutschland GmbH, 30175 Hannover (DE)
(72) Erfinder: Kahner, Rainer, 30175 Hannover (DE); Krieger, Ralf, 30175 Hannover (DE)
(74) Vertreter: Continental Corporation

(57) **Zusammenfassung**

Die Erfindung betrifft ein Verfahren zur Aufbereitung von Fahrzeugreifen, die mindestens aus Elastomermaterial mit eingebetteten Festigkeitsträgern gebildet sind, umfassend die Schritte der Bereitstellung der aufzubereitenden Fahrzeugreifen, Abtrennen der Festigkeitsträger von dem Elastomermaterial durch mechanisches Zerkleinern der Fahrzeugreifen auf Partikelgrößen von 1 bis 3 mm und anschließendes Klassieren derselben unter Nutzung der Schwer- und/oder Fliehkrafttrennung unter Auftrennung in getrennte Fraktionen des Elastomermaterials und der Festigkeitsträger.

## Beschreibung

Die Erfindung betrifft ein Verfahren zur Aufbereitung von Fahrzeugreifen, die mindestens aus Elastomermaterial mit eingebetteten Festigkeitsträgern gebildet sind.

Fahrzeugreifen im Sinne der Erfindung sind beispielsweise Fahrradreifen, Autoreifen sowie generell Reifen für ein- und mehrspurige Fahrzeuge, sowohl in Form von Fahrzeugluftreifen als auch Vollgummireifen einschließlich weiterer Bauteile, wie Schläuche und beispielsweise metallische Zubehörteile, wie Ventile, die nachfolgend auch als Accessories bezeichnet werden.

Bei einer Vielzahl derartiger Fahrzeugreifen wird deren Funktion nur durch einen Werkstoffverbund aus Polymeren, insbesondere Elastomermaterial und eingebetteten Festigkeitsträgern erreicht, die beispielsweise Garne aus textilen Fasern, wie Polyamid (Nylon), Polyester, Baumwolle, Rayon oder aber auch Garne aus Flüssigkristallpolymeren oder synthetische Flüssigkristallpolymeren, wie Aramidfasern (Kevlar^{®}) oder Fasern aus aromatischen Polyestern, wie Vectran^{®} umfassen. Wenn solche Festigkeitsträger in das Elastomermaterial eingebettet sind, ist die Auftrennung in sortenreine Recycling-Materialien im Zuge der Aufbereitung der Fahrzeugreifen bislang nicht möglich. Dies erzeugt Zielkonflikte, beispielsweise bei der Entwicklung gut recyclingfähiger Verbundmaterialien, beispielsweise Pannenschutzeinlagen für Fahrradreifen.

Zudem fordert die Herstellung hochwertiger Produkte aus recycelten Materialien hohe Ansprüche an die einzusetzenden recycelten Materialien, insbesondere deren Sortenreinheit. Nur durch hohe Sortenreinheit sind beispielsweise unterschiedliche Materialeigenschaften hydrophober oder hydrophiler Materialien zu trennen, da hieraus ansonsten vermeidbare Schwachstellen folgen. Durch diese hohen Anforderungen an die Sortenreinheit recycelter Materialien aus der Aufbereitung von Fahrzeugreifen der eingangs genannten Art wird das Potenzial und auch die Nachfrage an Elastomer-Festigkeitsträger-Verbundwerkstoffen reduziert. Da jedoch in Zukunft vermehrt Regularien in Richtung der Etablierung einer Kreislaufwirtschaft zu erwarten sind, erhöht sich der Handlungsbedarf, um etablierte Elastomer-Festigkeitsträger-Verbundwerkstoffe, wie Pannenschutzeinlagen und der gleichen aufzuarbeiten und die Aufarbeitbarkeit bereits in der Design- und Entwicklungsphase zu berücksichtigen.

Aufgabe der Erfindung ist es, ein einfaches und mit geringem Aufwand zu betreibendes Verfahren zur Aufbereitung von Fahrzeugreifen vorzuschlagen, welches eine zuverlässige Trennung der bereitgestellten Fahrzeugreifen in eine Fraktion des Elastomermaterials und eine weitere Fraktion der Festigkeitsträger ermöglicht, ohne die in den Fraktionen vorhandenen Elastomere bzw. Festigkeitsträger einer unerwünscht starken Degradation zu unterwerfen.

Zur Lösung der gestellten Aufgabe wird erfindungsgemäß ein Verfahren gemäß den Merkmalen des Patentanspruchs 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass die aufzubereitenden Fahrzeugreifen einschließlich der vorhandenen Accessoires bereitgestellt werden und in einem ersten Schritt durch mechanisches Vorzerkleinern auf eine nachfolgend leicht handhabbare Größe gebracht werden, die sich nach der vorhandenen Maschinenspezifikation richtet. Anschließend wird erfindungsgemäß eine Trennung der Elastomermaterialien von den eingebetteten Festigkeitsträgern bewirkt, sodass nachfolgend die solchermaßen getrennten Festigkeitsträger und das Elastomermaterial einem Klassierschritt unterworfen werden können, in welchem die Festigkeitsträger einerseits und das Elastomermaterial andererseits in getrennte Fraktionen hoher Sortenreinheit aufgeteilt werden. Diese getrennten Fraktionen können sodann in nachfolgenden weiteren Aufbereitungsschritten weiter aufgetrennt oder unmittelbar einer Wiederverwertung zugeführt werden.

Wesentlicher Vorteil des erfindungsgemäßen Verfahrens ist es, dass das Elastomermaterial und die Festigkeitsträger voneinander getrennt werden, ohne diese in ihren spezifischen Materialeigenschaften übermäßig zu degradieren, sodass sich die erhaltenen Fraktionen problemlos einer Wiederverwendung zuführen lassen.

Nach einem Vorschlag der Erfindung wird die Fraktion des Elastomermaterials von den eingebetteten Festigkeitsträgern durch eine an die Vorzerkleinerung anschließende Feinzerkleinerung getrennt, in welcher das aus der Vorzerkleinerung stammende Material auf Partikelgrößen von 1 bis 3mm zerkleinert wird, wobei dich die Festigkeitsträger vom Elastomermaterial trennen. Anschließend können diese unter Nutzung der Schwer- und/oder Fliehkrafttrennung in getrennte Fraktionen zur separaten Weiterverarbeitung aufgeteilt werden.

Nach einer alternativen Ausgestaltung der Erfindung kann bei geeignetem Elastomermaterial, z.B. auf Basis von thermoplastischen Elastomeren, das Abtrennen der Festigkeitsträger von dem Elastomermaterial dadurch bewirkt werden, dass im Anschluss an die Vorzerkleinerung das Elastomermaterial in einem Lösungsmittel aufgelöst und/oder durch Wärmezufuhr aufgeschmolzen wird, wodurch insbesondere im Elastomermaterial enthaltene thermoplastische Materialien, die als Gummiersatz Verwendung finden, zum Beispiel Innenschichten oder Karkassgummierungen, abgetrennt und sortenrein einer Wiederverwendung zugeführt werden können. Auch kommt eine De-Polymerisierung von im Elastomermaterial enthaltenen Polymeren in Betracht, um eine Auftrennung zu bewirken.

Sofern im Fahrzeugreifen auch Metallteile enthalten sind, beispielsweise Drahteinlagen oder auch Ventile oder Ventilsitze, können diese nach einem weiteren Vorschlag der Erfindung vor oder auch nach dem Abtrennen der Festigkeitsträger in einem Magnetabscheider abgetrennt werden, um sie einer sortenreinen Wiederverwertung zuzuführen. Voraussetzung ist allerdings, dass diese Metallteile aus magnetisierbaren Metallwerkstoffen hergestellt sind.

Nicht magnetisierbare metallische Werkstoffe werden auch in der durchgeführten Schwer- und/oder Fliehkrafttrennung ausgesondert, da sie üblicherweise großen Dichteunterschied zum Elastomermaterial aufweisen und von daher leicht abgetrennt werden können. Beispielsweise weisen übliche Elastomermaterialien eine Dichte im Bereich von 0,8 g/cm^3 bis 1,2 g/cm^3 und metallische Werkstoffe eine Dichte von größer 3,5 g/cm^3 auf.

Das erfindungsgemäß vorgesehene mechanische Vor- und/oder Feinzerkleinern der bereitgestellten Fahrzeugreifen kann nach einem Vorschlag der Erfindung durch Hobeln, Schreddern und/oder Wellenschreddern erfolgen, sodass auf kostengünstige Standard-Prozesse zurückgegriffen werden kann.

Das in den Fahrzeugreifen enthaltene Elastomermaterial kann sowohl Synthese-als auch Naturkautschuk und/oder thermoplastische Elastomere sowie Polyolefin, wie Polyethylen enthalten und kann zu Granulaten in einer Korngröße zwischen 1 bis 3 mm zerkleinert werden.

Die in den Fahrzeugreifen enthaltenen Festigkeitsträger umfassen faserförmige Garne auf Basis von Polyamid, Polyester, Baumwolle, Rayon oder auch Garne aus Flüssigkristallpolymeren und/oder Aramiden und/oder aromatischen Polyestern. Garne aus Aramiden sind häufig unter der Bezeichnung Kevlar^{®} im Einsatz und Garne aus aromatischen Polyestern sind unter der Marke Vectran^{®} in Fahrzeugreifen im Einsatz.

Das erfindungsgemäße vorgesehene Klassieren der zerkleinerten und in Elastomermaterial und Festigkeitsträger getrennten Fahrzeugreifen kann nach einem Vorschlag der Erfindung in einem Windsichter und/oder durch Aufschwimmen in einer Flüssigkeit erfolgen, wobei auch Kombinationen der Klassierverfahren und/oder der vorgenannten weiteren Verfahren zum Auftrennen des Elastomermaterials zur Anwendung kommen können.

Mit der vorangehend beschriebenen Erfindung werden Polymere bzw. Elastomermaterialien und eingebettete Festigkeitsträger von Fahrzeugreifen und deren gegebenenfalls vorhandenen weiteren Komponenten zuverlässig in sortenreine Fraktionen getrennt, ohne die getrennten Materialien übermäßig zu degradieren, sodass sie für eine Zuführung in technische Prozesse einer Kreislaufwirtschaft geeignet sind und eine nachhaltige Produktion ermöglichen sowie entstehende Abfallmengen reduziert werden.

Das Verfahren ist vorteilhaft für die Aufbereitung von Fahrzeugluftreifen.

Als besonders vorteilhaft hat sich das Verfahren dabei für die Aufbereitung von Fahrradreifen und/oder Motorradreifen, bevorzugt Fahrradreifen, herausgestellt.

## Patentansprüche

1. Verfahren zur Aufbereitung von Fahrzeugreifen, die mindestens aus Elastomermaterial mit eingebetteten Festigkeitsträgern gebildet sind, umfassend die Schritte der Bereitstellung der aufzubereitenden Fahrzeugreifen, mechanisches Vorzerkleinern der Fahrzeugreifen und Abtrennen der Festigkeitsträger von dem Elastomermaterial sowie anschließendes Klassieren derselben unter Auftrennung in getrennte Fraktionen des Elastomermaterials und der Festigkeitsträger.

2. Verfahren nach Anspruch 1, **dadurch gekennzeichnet, dass** das Abtrennen der Festigkeitsträger von dem Elastomermaterial durch eine dem Vorzerkleinern nachfolgendes Feinzerkleinern auf Partikelgrößen von 1 bis 3 mm bewirkt wird und das Klassieren derselben unter Nutzung der Schwer- und/oder Fliehkrafttrennung bewirkt wird.

3. Verfahren nach Anspruch 1, **dadurch gekennzeichnet, dass** das Abtrennen der Festigkeitsträger von dem Elastomermaterial durch ein dem Vorzerkleinern nachfolgendes Auflösen des Elastomermaterials in einem Lösungsmittel und/oder Aufschmelzen und/oder De-Polymerisieren bewirkt wird.

4. Verfahren nach einem der Ansprüche 1 bis 3, **dadurch gekennzeichnet, dass** die Fahrzeugreifen Metallteile enthalten, die vor oder nach dem Abtrennen der Festigkeitsträger in einem Magnetabscheider abgetrennt werden.

5. Verfahren nach einem der Ansprüche 1 bis 4, **dadurch gekennzeichnet, dass** das mechanische Vorzerkleinern und/oder Feinzerkleinern durch Hobeln, Schreddern und/oder Wellenschreddern erfolgt.

6. Verfahren nach einem der Ansprüche 1 bis 5, **dadurch gekennzeichnet, dass** das Elastomermaterial Synthese- und/oder Naturkautschuk und/oder thermoplastische Elastomere umfasst.

7. Verfahren nach einem der Ansprüche 1 bis 6, **dadurch gekennzeichnet, dass** die Festigkeitsträger faserförmige Garne auf Basis von Polyamid, Polyester, Baumwolle oder Rayon und/oder Garne aus Flüssigkristallpolymeren und/oder Aramiden und/oder aromatischen Polyestern umfassen.

8. Verfahren nach einem der Ansprüche 1 bis 7, **dadurch gekennzeichnet, dass** das Klassieren in einem Windsichter, durch Aufschwimmen in einer Flüssigkeit und/oder durch Filtration erfolgt.

9. Verfahren nach einem der Ansprüche 1 bis 8, **dadurch gekennzeichnet, dass** der Fahrzeugreifen ein Fahrzeugluftreifen ist.

10. Verfahren nach Anspruch 9, **dadurch gekennzeichnet, dass** der Fahrzeugluftreifen ein Fahrradreifen und/oder ein Motorradreifen, bevorzugt ein Fahrradreifen, ist.
